(19) Europäisches Patentamt
European Patent Office
Office européen des brevets

(11) **EP 2 980 143 A1**

(12) **EUROPEAN PATENT APPLICATION**
published in accordance with Art. 153(4) EPC

(43) Date of publication:
**03.02.2016 Bulletin 2016/05**

(21) Application number: **14773901.5**

(22) Date of filing: **27.03.2014**

(51) Int Cl.:
**C08J 9/04** (2006.01)

(86) International application number:
**PCT/JP2014/058907**

(87) International publication number:
**WO 2014/157538 (02.10.2014 Gazette 2014/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.03.2013 JP 2013069195**

(71) Applicant: **Sekisui Plastics Co., Ltd.**
**Osaka-shi, Osaka 530-0047 (JP)**

(72) Inventors:
• **OZAWA, Masahiko**
  **Koka-shi**
  **Shiga 528-0056 (JP)**
• **ISAYAMA, Akira**
  **Koka-shi**
  **Shiga 528-0056 (JP)**

(74) Representative: **Hoffmann Eitle**
**Patent- und Rechtsanwälte PartmbB**
**Arabellastraße 30**
**81925 München (DE)**

(54) **MOLDED BODY OF COMPOSITE RESIN FOAM**

(57) A composite resin expanded molded article comprising: 100 parts by mass of an ethylene-vinyl acetate copolymer; and 100 to 400 parts by mass of a polystyrene-based resin, wherein the composite resin expanded molded article has an average cell diameter D of 100 to 500 $\mu$m and an average cell membrane thickness T of 1 to 5 $\mu$m.

Figure 1

(a)
Membrane thickness: 1.5 $\mu$m

(b)
Cell diameter: 150 $\mu$m

EP 2 980 143 A1

**Description**

TECHNICAL FIELD

The present invention relates to a molded body of composite resin foam (composite resin expanded molded article). More specifically, the present invention relates to a composite resin expanded molded article having superior slow-burning properties and thermal resistance.

BACKGROUND TECHNOLOGY

In general, although expanded molded articles of a polyethylene-based resin have high elasticity, and superior oil resistance and impact resistance, they have the disadvantages of low rigidity and weak compression strength. On the other hand, expanded molded articles of a polystyrene-based resin, although having superior rigidity, have the disadvantage of being brittle.

Thus, in order to complement these disadvantages, expanded molded articles of a composite resin of a polyethylene-based resin and a polystyrene-based resin have been suggested, and are widely utilized as cushioning materials for packaging, heat insulation materials for building materials, structural members for vehicles, and the like.

Even in these technical fields, flame retardancy and slow-burning properties are desired of structural members for vehicles from a safety viewpoint, and various research has being carried out.

For example, Japanese Unexamined Patent Application, First Publication No. 2012-72225 (Patent Document 1) discloses composite resin expanded particles prepared from 20 to 50 parts by mass of an olefin-based resin component and 80 to 50 parts by mass of a styrene-based resin component (total of both components is 100 parts by mass), wherein 1 to 15% by mass of a halogen-based flame retardant that includes a secondary or tertiary halide and that has a 50% decomposition temperature of 290 to 350°C has been formulated, and the content of aliphatic hydrocarbons having 3 to 6 carbons is less than 0.1% by mass (includes 0).

Also, Japanese Unexamined Patent Application, First Publication No. 2006-257150 (Patent Document 2) discloses carbon-containing styrene-modified polyethylene-based resin particles and expandable resin particles comprising: 120 to 400 parts by weight of a styrene-based resin with respect to 100 parts by weight of a carbon-containing ethylene-vinyl acetate copolymer having a specific polymerization ratio and degree of crystallinity; and 1 to 8 parts by weight of a halogen-based flame retardant with respect to 100 parts by weight of the resin components, production methods thereof, pre-expanded particles, and an expanded molded article.

PRIOR ART DOCUMENTS

Patent Documents

Patent Document 1: Japanese Unexamined Patent Application, First Publication No. 2012-72225
Patent Document 2: Japanese Unexamined Patent Application, First Publication No. 2006-257150

SUMMARY OF THE INVENTION

PROBLEM TO BE SOLVED BY THE INVENTION

The composite resin expanded particles and composite resin particles disclosed in the aforementioned Patent Documents 1 and 2 have superior flame retardancy since they include a flame retardant while, on the other hand, they have the problem of thermal resistance deteriorates since they include a flame retardant.

Thus, the present invention has the object of providing a composite resin expanded molded article having superior slow-burning properties and thermal resistance.

MEANS FOR SOLVING THE PROBLEM

The inventors of the present invention, as a result of earnest research in order to achieve the aforementioned object have expectedly found that, by making the average cell diameter and the average cell membrane thickness specific ranges in a composite resin expanded molded article comprising an ethylene-vinyl acetate copolymer and a polystyrene-based resin in a specific ratio, a composite resin expanded molded article having superior slow-burning properties and thermal resistance can be obtained even when no flame retardant is included, thus leading to completion of the present invention.

Thus, in accordance with the present invention, a composite resin expanded molded article comprising: 100 parts by mass of an ethylene-vinyl acetate copolymer; and 100 to 400 parts by mass of a polystyrene-based resin, wherein the composite resin expanded molded article has an average cell diameter D of 100 to 500 $\mu$m and an average cell membrane thickness T of 1 to 5 $\mu$m is provided.

EFFECTS OF THE INVENTION

In accordance with the present invention, a composite resin expanded molded article having superior slow-burning properties and thermal resistance can be provided.

Also, the composite resin expanded molded article of the present invention further exhibits the aforementioned effect when any one of the following conditions is satisfied:

(1) the composite resin expanded molded article does not include a flame retardant;
(2) the average cell diameter D and the average cell membrane thickness T satisfy the relationship of $200 \leq D \times T \leq 1,100$; and
(3) the content of aliphatic hydrocarbons having 3 to 6 carbons in the composite resin expanded molded article is 0.5% by mass or less.

In particular, the composite resin expanded molded article of the present invention exhibits superior slow-burning properties and thermal resistance even when a flame retardant is not included.

BRIEF DESCRIPTION OF THE DRAWINGS

Figure 1(a) is a SEM image showing the average cell membrane thickness of the composite resin expanded molded article of Example 1, and Figure 1(b) is a SEM image showing the average cell diameter of the composite resin expanded molded article of Example 1.

Figure 2(a) is a SEM image showing the average cell membrane thickness of the composite resin expanded molded article of Example 2, and Figure 2(b) is a SEM image showing the average cell diameter of the composite resin expanded molded article of Example 2.

Figure 3(a) is a SEM image showing the average cell membrane thickness of the composite resin expanded molded article of Comparative Example 2, and Figure 3(b) is a SEM image showing the average cell diameter of the composite resin expanded molded article of Comparative Example 2.

BEST MODE FOR CARRYING OUT THE INVENTION

[Composite Resin Expanded Molded Article]

The composite resin expanded molded article of the present invention (hereinafter, also referred to as "expanded molded article") is characterized by being a composite resin expanded molded article comprising: 100 parts by mass of an ethylene-vinyl acetate copolymer; and 100 to 400 parts by mass of a polystyrene-based resin, wherein the composite resin expanded molded article has an average cell diameter D of 100 to 500 $\mu$m and an average cell membrane thickness T of 1 to 5 $\mu$m.

The inventors focused on the average cell diameter and the average cell membrane thickness of a composite resin expanded molded article not including a flame retardant in order to suppress deterioration in thermal resistance by the addition of a flame retardant, and upon exploration of the relationship with the slow-burning properties thereof, unexpectedly found the fact that if the average cell diameter and the average cell membrane thickness are within specific ranges, slow-burning properties equivalent to or exceeding a composite resin expanded molded article including a flame retardant can be obtained, and deterioration in thermal resistance can be suppressed from not including a flame retardant.

The aforementioned Patent Document 1 discloses that the preferable average cell diameter of the composite resin expanded particles is 50 to 500 $\mu$m and that if the average cell diameter exceeds 500 $\mu$m, there is the possibility of deterioration in strength and worsening of flame retardancy in the obtained expanded molded article. However, there is nothing disclosed therein about the average cell membrane thickness of the composite resin expanded particles and the relationship between this and the average cell diameter.

Also, the aforementioned Patent Document 2 does not disclose about the average cell diameter and the average cell membrane thickness of the pre-expanded particles, and the relationship between these.

(Composite Resin)

There are no particular limitations on the polystyrene-based resin constituting the expanded molded article so long as such is a resin having a styrene-based monomer as the main component, and styrene or a styrene derivative alone or as a copolymer can be mentioned.

As styrene derivatives, $\alpha$-methylstyrene, vinyl toluene, chlorostyrene, ethylstyrene, isopropylstyrene, dimethylstyrene, bromostyrene, and the like can be mentioned. These styrene-based monomers may be used alone or may be combined.

The polystyrene-based resin may be a resin that is combined with a vinyl-based monomer copolymerizable with a styrene-based monomer.

As vinyl-based monomers, for example, multifunctional monomers such as divinylbenzenes such as o-divinylbenzene, m-divinylbenzene, and p-divinylbenzene, and alkylene glycol di(meth)acrylates such as ethylene glycol di(meth)acrylate and polyethylene glycol di(meth)acrylate; (meth)acrylonitrile; methyl (meth)acrylate; butyl (meth)acrylate; and the like can be mentioned. Among these, multifunctional monomers are preferable, ethylene glycol di(meth)acrylate, polyethylene glycol di(meth)acrylates in which n is 4 to 16, and divinylbenzenes are more preferable, and divinylbenzenes and ethylene glycol di(meth)acrylate are particularly preferable. The combined monomers may be used alone or may be combined.

Also, when combined monomers are used, it is preferable that the content thereof is set so that the styrene-based monomer is an amount so as to become the main component (for example, 50% by mass or more).

In the present invention, "(meth)acryl" means "acryl" or "methacryl".

As the ethylene-vinyl acetate copolymer constituting the expanded molded article, there are particularly no limitations on the mass ratio and the like thereof so long as such is a copolymer of vinyl acetate and ethylene. For example, copolymers of 3.0 to 7.0% by mass of vinyl acetate and 93.0 to 97.0% by mass of ethylene can be mentioned. Specifically, a copolymer of 4.0% by mass of vinyl acetate and 96.0% by mass of ethylene as used in the examples can be mentioned.

If the vinyl acetate is less than 3.0% by mass, there is a tendency for the slow-burning properties of the expanded molded article to worsen. If the vinyl acetate exceeds 7.0% by mass, there is a tendency for the thermal resistance of the expanded molded article to worsen. Therefore, the content of vinyl acetate may be appropriately selected by the target properties of the expanded molded article.

The vinyl acetate in the aforementioned ethylene-vinyl acetate copolymer is, for example, 3.0, 3.5, 4.0, 4.5, 5.0, 5.5, 6.0, 6.5, and 7.0% by mass.

The number-average molecular weight ($M_n$) of the ethylene-vinyl acetate copolymer is about $30 \times 10^3$ to $60 \times 10^3$, the weight-average molecular weight (Mw) of the ethylene-vinyl acetate copolymer is about $200 \times 10^3$ to $300 \times 10^3$, and the Z-average molecular weight (Mz) of the ethylene-vinyl acetate copolymer is about $600 \times 10^3$ to $1,000 \times 10^3$. The ratio (Mw/Mn) of the weight-average molecular weight (Mw) to the number-average molecular weight ($M_n$) is about 4.5 to 6.5.

The number-average molecular weight ($M_n$) of the aforementioned copolymer is, for example, $30 \times 10^3$, $35 \times 10^3$, $40 \times 10^3$, $45 \times 10^3$, $50 \times 10^3$, $55 \times 10^3$, and $60 \times 10^3$.

Also, the weight-average molecular weight (Mw) of the aforementioned copolymer is, for example, $200 \times 10^3$, $225 \times 10^3$, $250 \times 10^3$, $275 \times 10^3$, and $300 \times 10^3$.

Furthermore, the Z-average molecular weight (Mz) of the aforementioned copolymer is, for example, $600 \times 10^3$, $700 \times 10^3$, $800 \times 10^3$, $900 \times 10^3$, and $1,000 \times 10^3$.

Also, the aforementioned ratio (Mw/Mn) is, for example, 4.5, 5.0, 5.5, 6.0, and 6.5.

The polystyrene-based resin is 100 to 400 parts by mass with respect to 100 parts by mass of the ethylene-vinyl acetate copolymer.

If the polystyrene-based resin is less than 100 parts by mass, the polystyrene-based resin is insufficient, and thus desired expandabilty may not be obtainable, and the rigidity of the expanded molded article obtained by secondary expansion of the pre-expanded particles may deteriorate. On the other hand, if the polystyrene-based resin exceeds 400 parts by mass, the slow-burning properties and the thermal resistance of the expanded molded article obtained by secondary expansion of the pre-expanded particles may deteriorate. Such polystyrene-based resin with respect to 100 parts by mass of the ethylene-vinyl acetate copolymer is, for example, 100, 150, 200, 250, 300, 350, and 400 parts by mass.

The polystyrene-based resin is more preferably 100 to 300 parts by mass, and further preferably 100 to 250 parts by mass, with respect to 100 parts by mass of the ethylene-vinyl acetate copolymer.

In the present invention, the ratio of the raw material resin and monomer is roughly equal to the ratio thereof in the expanded particles and the expanded molded article.

(Physical Properties of Expanded Molded Article)

The expanded molded article of the present invention has an average cell diameter D of 100 to 500 $\mu$m.

Average cell diameter D means the average cell diameter D ($\mu$m) of expanded particles in the expanded molded article measured in accordance with the test method of ASTM D2842-69, and the specific measurement method thereof is explained in the "Examples" section.

If the average cell diameter D is less than 100 $\mu$m, fusion of the expanded molded article obtained by secondary expansion of pre-expanded particles deteriorates, and thus there is the possibility that this leads to deterioration of rigidity. On the other hand, if the average cell diameter D exceeds 500 $\mu$m, the slow-burning properties of the expanded molding article may deteriorate. Such average cell diameter D is, for example, 100, 150, 200, 250, 300, 350, 400, 450, and 500 $\mu$m.

A preferable range of the average cell diameter D is from 100 to 400 $\mu$m, and a more preferable range is from 150 to 350 $\mu$m.

The expanded molded article of the present invention has an average cell membrane thickness T of 1 to 5 $\mu$m.

For average cell membrane thickness T, the expanded molded article is divided into two in the thickness direction, and means the average value of the thickness ($\mu$m) in 5 arbitrarily selected expanded particles from the slice of the expanded molded article divided into two. The specific measurement method thereof is explained in the "Examples" section.

If the average cell membrane thickness T is less than 1 $\mu$m, there is the possibility that this leads to deterioration of the rigidity of the expanded molded article obtained by secondary expansion of pre-expanded particles. On the other hand, if the average cell membrane thickness T exceeds 5 $\mu$m, the slow-burning properties of the expanded molded article may worsen. Such average cell membrane thickness T is, for example, 1.0, 1.5, 2.0, 2.5, 3.0, 3.5, 4.0, 4.5, and 5.0 $\mu$m.

A preferable range of the average cell membrane thickness T is from 1.0 to 4.0 $\mu$m, and a more preferable range is from 1.4 to 3.5 $\mu$m.

Also, the average cell diameter D and the average cell membrane thickness T satisfy the relationship of $200 \leq D \times T \leq 1,100$.

If (DxT) is less than 200, there is the possibility that this leads to deterioration of the rigidity of the expanded molded article obtained by secondary expansion of pre-expanded particles. On the other hand, if (DxT) exceeds 1,100, the slow-burning properties of the expanded molded article may worsen. Such (DxT) is, for example, 200, 300, 400, 500, 600, 700, 800, 900, 1,000, and 1,100.

A more preferable range of (DxT) is 200 to 1,000.

Furthermore, the content of aliphatic hydrocarbons having 3 to 6 carbons in the composite resin expanded molded article is preferably 0.5% by mass or less.

The hydrocarbons having 3 to 6 carbons, as mentioned below, are derived from the blowing agent, and if the content in the expanded molded article thereof exceeds 0.5% by mass, the slow-burning properties and the rigidity of the expanded molded article may worsen. Such content of aliphatic hydrocarbons is, for example, 0, 0.1, 0.15, 0.2, 0.25, 0.3, 0.35, 0.4, 0.45, and 0.5% by mass.

The minimum thereof is preferably 0% by mass, and a more preferable content range is from 0 to 0.3% by mass.

The expanded molded article of the present invention preferably has a density of 0.025 to 0.05 g/cm$^3$.

The specific measurement method thereof is explained in the "Examples" section.

If the density exceeds 0.05 g/cm$^3$, the lightweight properties of the expanded molded article may deteriorate. On the other hand, if the density is less than 0.025 g/cm$^3$, by shrinkage occurring in the obtained expanded molded article, the appearance may not be good and also, the thermal resistance and the slow-burning properties of the expanded molded article may deteriorate. Such density of the expanded molded article is, for example, 0.025, 0.030, 0.035, 0.040, 0.045, and 0.050 g/cm$^3$.

A more preferable density range is from 0.025 to 0.035 g/cm$^3$, and a further preferable range is from 0.028 to 0.035 g/cm$^3$.

The expansion ratio of the expanded molded article is represented by the inverse of the density of the expanded molded article, and for the aforementioned preferable density range becomes 20 to 40.

The expanded molded article of the present invention has superior slow-burning properties and thermal resistance while not including a flame retardant.

The slow-burning properties, as explained in the "Examples" section, can be measured in accordance with the method of United States Federal Motor Vehicle Safety Standard FMVSS 302 "Flammability of Interior Materials".

In this method, a burning speed of 100 mm/min or less, or 80 mm/min or less is the pass reference.

The expanded molded article of the present invention has slow-burning properties equivalent to or exceeding those of an expanded molded article including a flame retardant.

Also, the thermal resistance can be evaluated with the rate of dimensional change on heating thereof as the indicator.

The rate of dimensional change on heating can be measured in accordance with the B method described in JIS K6767: 1999 "Cellular Plastics-Polyethylene-Methods of Test", and the specific measurement method thereof is explained in the "Examples" section.

The expanded molded article of the present invention preferably has a rate of dimensional change on heating of 1.0% or less.

If the rate of dimensional change on heating exceeds 1.0%, it cannot be used in fields which require thermal resistance such as vehicle members.

The rate of dimensional change on heating is more preferably 0.9% or less, and further preferably 0.7% or less.

[Production Method of Composite Resin Expanded Molded Article]

The expanded molded article of the present invention can be produced by obtaining expandable particles by impregnating a blowing agent into the aforementioned composite resin particles, obtaining expanded particles by pre-(primary) expanding the obtained expandable particles, and expansion molding the obtained expanded particles.

Hereinafter, the production of the expanded molded article of the present invention is explained simply by dividing into production methods of composite resin particles, expandable particles, expanded particles, and expanded molded article.

(Composite Resin Particles)

There are no particular limitations as the production method of the composite resin particles and, for example, seed polymerization methods can be mentioned.

In general, seed polymerization methods can obtain composite resin particles by absorbing a monomer mixture into seed particles and carrying out polymerization of the monomer mixture after absorption or while absorbing. Also, expandable resin particles can be obtained by impregnating a below-mentioned blowing agent into composite resin particles after polymerization or while polymerizing.

If additives are included in the composite resin particles, these may be added at the time of polymerization of the monomer mixture or may be impregnated into the composite resin particles after the completion of polymerization.

In the production method of composite resin particles by a seed polymerization method, for example, firstly, a monomer mixture including a monomer of a styrene-based resin (hereinafter, also referred to as "styrene monomer") is absorbed into the ethylene-vinyl acetate copolymer particles as seed particles in an aqueous medium, and the composite resin particles are obtained by carrying out polymerization of the monomer mixture after absorption or while absorbing.

It is not necessary for all of the monomers constituting the monomer mixture to be simultaneously supplied to the aqueous medium, and all or a part of the monomers may supplied to the aqueous medium at different timings. If additives are contained in the composite resin particles, the additives may be added to the monomer mixture or the aqueous medium, or may be contained in the seed particles.

As the aqueous medium, water, and a mixed medium of water and a water-soluble medium (for example, a lower alcohol such as methyl alcohol or ethyl alcohol) can be mentioned.

A known dispersant (suspension stabilizer) may be used in the aqueous medium in order to stabilize the droplets of monomer mixture and dispersion properties of the seed particles.

As dispersants, for example, organic-based dispersants such as partially-saponified polyvinyl alcohol, polyacrylic acid salts, polyvinyl pyrrolidone, carboxymethyl cellulose, and methyl cellulose; and inorganic-based dispersants such as magnesium pyrophosphate, calcium pyrophosphate, calcium phosphate, calcium carbonate, magnesium phosphate, magnesium carbonate, and magnesium oxide can be mentioned. Among these, inorganic-based dispersants are preferable since it is possible to maintain a more stable dispersed state.

In the case of using an inorganic-based dispersant, it is preferable to use in combination with a surfactant. As such surfactant, for example, sodium dodecyl benzenesulfonate, sodium $\alpha$-olefinsulfonate, and the like can be mentioned.

Polymerization of the monomer mixture can be carried out, for example, by heating at 60 to 150°C for 2 to 40 hours. The polymerization can be carried out after the monomer mixture has been absorbed into the seed particles or while absorbing the monomer mixture into the seed particles. The amounts of the monomer and the resin are roughly equal.

The monomer mixture is normally polymerized in the presence of a polymerization initiator. The polymerization initiator is normally impregnated simultaneously into the seed particles with the monomer mixture.

The polymerization initiator is not particularly limited so long as it has been conventionally used in the polymerization of styrene-based monomers. For example, organic peroxides such as benzoyl peroxide, t-butylperoxy benzoate, t-butylperoxy pivalate, t-butylperoxy-2-ethylhexyl monocarbonate, t-butylperoxy isopropyl carbonate, t-butylperoxyacetate, 2,2-t-butylperoxybutane, t-butylperoxy-3,3,5-trimethyl hexanoate, di-t-butylperoxy hexahydroterephthalate, 2,5-dimethyl-2,5-bis(benzoylperoxy) hexane, and dicumyl peroxide can be mentioned. These polymerization initiators may be used alone or by combining two or more thereof. The used amount of polymerization initiator is, for example, in the range of from 0.01 to 5 parts by mass with respect to 100 parts by mass of the monomer mixture.

There are no particular limitations on the seed particles and can be produced by a publicly-known method. For example, suspension polymerization methods, and methods of, after melting and kneading the raw material resin in an extruder, extruding as strand shapes and cutting to desired particle diameters, can be mentioned.

The particle diameter of the seed particles can be appropriately adjusted according to the average particle diameter and the like of the composite resin particle to be produced. For example, when composite resin particles having an average particle diameter of 1.5 mm are produced, preferably seed particles having an average particle diameter of about 0.8 to 1.0 mm are used (about 70 to 75 mg per 100 particles).

The monomer mixture may include additives such as plasticizers, lubricants, binding inhibitors, fusion accelerators, cell regulators, antistatic agents, spreaders, fillers, crosslinking agents, and coloring agents.

The additives may be included at the time of production of the composite resin.

As plasticizers, phthalic acid esters; glycerin fatty acid esters such as glycerin diacetomonolaurate, glycerin tristearate, and diacetylated glycerin monostearate; adipic acid esters like diisobutyl adipate; and the like can be mentioned.

As lubricants, paraffin wax, zinc stearate, and the like can be mentioned.

As binding inhibitors, calcium carbonate, silica, zinc stearate, aluminum hydroxide, ethylene bis-stearic acid amide, calcium phosphate tribasic, dimethyl silicone, and the like can be mentioned.

As fusion accelerators, stearic acid, stearic acid triglycerides, hydroxystearic acid triglycerides, stearic acid sorbitan esters, polyethylene wax, and the like can be mentioned.

As cell regulators, ethylene bis-stearic acid amide, polyethylene wax, and the like can be mentioned.

As antistatic agents, polyoxyethylene alkylphenol ethers, stearic acid monoglycerides, and the like can be mentioned.

As spreaders, polybutene, polyethylene glycol, silicon oil, and the like can be mentioned.

As fillers, synthetic or naturally-produced silicon dioxide and the like can be mentioned.

As crosslinking agents, organic peroxides such as 2,2-di-t-butyl peroxybutane, 2,2-bis(t-butylperoxy)butane, dicumyl peroxide, and 2,5-dimethyl-2,5-di-t-butyl peroxyhexane can be mentioned.

As coloring agents, carbon; chromates such as chrome yellow, zinc yellow, and barium yellow; ferrocyanides such Prussian blue; sulfides such as cadmium yellow and cadmium red; oxides such as iron black and red oxide; inorganic-based pigments such as silicates like ultramarine blue and titanium oxide; and organic-based pigments such as azo pigments such as monoazo pigments, disazo pigments, azo lakes, condensed azo pigments, and chelate azo pigments and polycyclic pigments such as phthalocyanine-based pigments, anthraquinone-based pigments, perylene-based pigments, perinone-based pigments, thioindigo-based pigments, quinacridone-based pigments, dioxazine-based pigments, isoindolinone-based pigments, and quinophthalone-based pigments can be mentioned.

The shape of the composite resin particles is not particularly limited, and spherical, oval, columnar, and the like can be mentioned, and among these shapes, spherical is preferable.

When the composite resin particles of the present invention are spherical, the average particle diameter thereof, considering the filling properties in molding cavities and the like of the expanded particles thereafter expanded by impregnating a blowing agent, is preferably 0.5 to 2.0 mm.

(Expandable Particles)

The expandable particles are obtained by impregnating a blowing agent into the composite resin by a publicly-known method.

As the blowing agent, there are no particular limitations so as long as such has been conventionally used in the expansion of polystyrene-based resins. For example, volatile blowing agents such as aliphatic hydrocarbons having 10 or less carbons such as isobutane, n-butane, n-pentane, isopentane, neopentane, and cyclopentane can be mentioned. In particular, butane-based blowing agents and pentane-based blowing agents are preferable, and volatile blowing agents having pentane as the main component (for example, 50% by weight or more) are particularly preferable. It can be also expected that pentane will act as a plasticizer.

The content of the blowing agent in the expandable particles is normally about 8.0 to 10.0% by mass. Such content is, for example, 8.0, 8.5, 9.0, 9.5, and 10.0% by mass.

Also, the expandable particles may include a blowing auxiliary agent and a plasticizer with the blowing agent.

As blowing auxiliary agents, aromatic organic compounds such as styrene, toluene, ethylbenzene, and xylene; cyclic aliphatic hydrocarbons such as cyclohexane and methylcyclohexane; solvents that have a boiling point of 200°C or less at 1 atm such as ethyl acetate and butyl acetate, and plasticizers such as diisobutyl adipate, diacetylated monolaurate, and coconut oil can be mentioned.

The content of the blowing auxiliary agent in the expandable particles is normally about 0.1 to 1.0% by mass. Such content is, for example, 0.1, 0.2, 0.3, 0.4, 0.5, 0.6, 0.7, 0.8, 0.9, and 1.0% by mass.

(Expanded Particles)

The expanded particles are obtained by expanding (pre-expanding) the expandable particles by a publicly-known method.

That is, the expanded particles can be obtained by pre-expanding the expandable particles of the present invention to a predetermined bulk density by a publicly-known method.

The conditions in pre-expansion may be appropriately selected by the used resin particles, desired physical properties, and the like. For example, the stress (gauge pressure) is about 0.005 MPa to 0.04 MPa, the temperature is about 85 to 100°C, and the time is about 60 to 180 seconds.

In the pre-expansion, air may be simultaneously fed with steam according to necessity when expanding.

The bulk density of the expanded particles is about 0.023 to 0.05 g/cm$^3$. Such bulk density is, for example, 0.023, 0.025, 0.030, 0.035, 0.040, 0.045, and 0.050 g/cm$^3$.

In order to obtain the expanded molded article of the present invention having the specific average cell diameter D and average cell membrane thickness T, the expandable particles may be subjected to a warm air treatment under the conditions of a temperature lower than that at pre-expansion, for example, about 40 to 70°C, for about 0.5 to 3 hours, or the expandable particles may be pre-expanded in two stages. As the conditions thereof, the second expansion is carried out within 4 to 72 hours from the first expansion.

(Expanded Molded Article)

The expanded molded article is obtained by expansion molding the expanded particles by a public-known method.

Specifically, the expanded molded article can be obtained by filling the expanded particles into the built-in molding cavity of a molding machine and then thermally-fusing the expanded particles so as to integrate while secondary expanding by heating.

The conditions in expansion molding may be appropriately selected by the used resin particles, desired physical properties, and the like. For example, the stress (gauge pressure) is about 0.06 MPa to 0.12 MPa and the heating time is about 15 to 60 seconds.

The density and other physical properties of the expanded molded article are as mentioned above.

EXAMPLES

Hereinafter, although the present invention is specifically explained by examples and comparative examples, the examples below are merely exemplifications of the present invention, and thus the present invention is not limited to only the examples below.

In the examples and the comparative examples, the obtained expanded molded articles were measured and evaluated as follows.

The devices used in measurement and evaluation are one example thereof and there are no limitations so long as they have equivalent functions.

<Bulk Density of Expanded Particles>

The bulk density of the expanded particles was measured as follows.

A weight (a) of about 5 g of expanded particles was weighed to two decimal places. The obtained expanded particles were placed in a 500 cm$^3$ measuring cylinder having a minimum memory unit of 5 cm$^3$. Next, a pressing tool composed of a circular resin plate having a diameter slightly smaller than the diameter of the measuring cylinder and a bar-like resin plate having a width of about 1.5 cm and a length of about 30 cm fixed upright to the center of the circular resin plate was abutted against the opening of the measuring cylinder so as to read a volume (b) of the expanded particles.

From the obtained weight (a) of expanded particles and volume (b) of expanded particles, the bulk density of the expanded particles was determined by the following equation.

$$\text{Bulk density of expanded particles (g/cm}^3) = (a)/(b)$$

<Average Cell Diameter D of Expanded Molded Article>

The average cell diameter D ($\mu$m) of expanded particles in the expanded molded article was measured in accordance with the test method of ASTM D2842-69.

An expanded molded article of 400 mm x 300 mm x 30 mm thickness that was prepared by pre-expanding to a bulk density of 0.033 g/cm$^3$ and expansion molding was sliced into two parts, and the cross section of the sliced part was magnified to 15 to 30 times and photographed using a scanning electron microscope (manufactured by Hitachi High-Technologies Corporation, Model: S-3000N).

The photographed images were printed on A4 paper, one image per page, and two straight lines passing through the center of the expanded particle were drawn so as to be orthogonal with each other, and the length of these straight lines and the number of cells on these straight line were measured (cells contacting the straight lines were also measured).

From the measurement results, an average chord length (t) of cells was calculated by the following equation.

$$\text{Cell average chord length t = line length/(number of cells x photo magnification)}$$

However, the arbitrarily straight lines should be drawn such that the cells do not contact only at contact points wherever possible, if not cells contacting the straight lines should be counted in.

The cell diameter was calculated from the obtained cell average chord length (t) and the following equation.

$$\text{Average cell diameter d = t/0.616}$$

The aforementioned operation was repeated at 10 points and the arithmetic average thereof was used as the average cell diameter D ($\mu$m).

<Average Cell Membrane Thickness T of Expanded Molded Article>

Similar to the average cell diameter D of the expanded molded article, the expanded molded article was divided into two in the thickness direction and a 300 to 3,500times magnified image was created using a scanning electron microscope (manufactured by Hitachi High-Technologies Corporation, Model: S-3000N) for 5 arbitrarily selected expanded particles from a slice of the expanded molded article divided into two. Subsequently, using the length measurement function of the scanning electron microscope system, 5 dotted lines were arbitrarily drawn on the cell membrane and the thickness thereof was measured. The aforementioned operation was repeated for 5 points and the arithmetic average of these 5 images was used as the average cell membrane thickness T ($\mu$m).

<Burning Speed>

The burning speed was measured in accordance with the method of United States Federal Motor Vehicle Safety Standard FMVSS 302 "Flammability of Interior Materials".

From an expanded molded article of 400 mm x 300 mm x 30 mm thickness prepared by pre-expanding to a bulk density of 0.033 g/cm$^3$ and expansion molding was cut out a sample piece of 350 mm x 100 mm x 12 mm thickness. When doing so, the sample piece was cut so that skin exists on at least one of the 350 mm x 100 mm surfaces. Subsequently, so that the 350 mm x 100 mm surfaces of the same piece become parallel, one end thereof was fixed, a 38 mm flame was made to contact the skin surface of the other end for 15 seconds, and the burn speed (mm/min) from a marked line A on the flame contact side to a marked line B at a distance of 254 mm therefrom was measured.

<Rate of Dimensional Change on Heating>

The rate of dimensional change on heating was measured according to the B method described in JIS K6767: 1999 "Cellular Plastics-Polyethylene-Methods of Test".

After the obtained expanded molded article was dried at a temperature of 60°C for 3 days, a sample piece of 150 mm x 150 mm x 30 mm thickness was cut out from this expanded molded article. In the central section thereof, three straight parallel lines were drawn respectively in vertical and horizontal directions so as to be 50 mm apart from each other, and then placed in a hot air circulation-type drier at 80°C for 168 hours. After being taken out therefrom and allowed to stand for 1 hour at a place of 23±2°C and a humidity of 50±5%, the dimensions of the vertical and horizontal lines were measured, and a rate of dimensional change on heating S (%) was calculated by the following equation.

$$S = (L1\text{-}L0)/L0 \times 100$$

In the equation, S represents the rate of dimensional change on heating (%), L1 represents the average dimensions (mm) after heating, and L0 represents the initial average dimensions (mm).

The rate of dimensional change on heating S (rate of shrinkage), if 1.0% or less at an absolute value was considered good and given "O" and, if exceeding 1.0%, was given "x".

<Density of Expanded Molded Article>

The density of the expanded molded article was measured in accordance with the method described in JIS A9511: 1995 "Preformed Cellular Plastics Thermal Insulation Materials".

The volume V ($cm^3$) of the obtained expanded molded article and the mass thereof W (g) were measured, and the density (g/$cm^3$) of the expanded molded article was determined by the following equation.

$$\text{Density of expanded molded article (g/cm}^3) = W/V$$

<Content of Aliphatic Hydrocarbons Having 3 to 6 Carbons>

After storing the obtained expanded molded article at room temperature for 7 days, 5 to 20 mg was precisely weighed and used as the measurement sample. This measurement sample was set in a pyrolyzer (manufactured by Shimadzu Corporation, PYR-1A) held at 180 to 200°C and after sealing the measurement sample, heated for 120 seconds to release the blowing agent component. A chart of the blowing agent was obtained under the below-mentioned conditions using a gas chromatograph (manufactured by Shimadzu Corporation, model: GC-14B, detector: FID) from the released blowing agent components. The content of the aliphatic hydrocarbons having 3 to 6 carbons (% by weight) in the expanded molded article was calculated from the obtained chart based on a calibration curve of the blowing agent components measured beforehand.

Gas Chromatograph Measurement Conditions

Column: "Shimalite 60/80NAW" (ø3.0 mm x 3 m) manufactured by Shinwa Chemical Industries Ltd.
Column temperature: 70°C
Detector temperature: 110°C
Injection port temperature: 110°C
Carrier gas: Nitrogen
Carrier gas flow rate: 60 ml/min

(Example 1)

Production of Composite Resin Expanded Molded Article of Ethylene-Vinyl

$$\text{Acetate Copolymer (EVA)/Polystyrene-Based Resin (PS)} = 40/60$$

Ethylene-vinyl acetate copolymer resin particles (manufactured by Japan Polyethylene Corporation, product name: Novatec EVA LV-115, vinyl acetate content of 4.0% by mass) were supplied to an extruder, and heated and mixed (melt kneaded), and then granulated by an under-water cutting technique and adjusted so as to become 40 mg per 100 particles to obtain 15.0 kg of ethylene-vinyl acetate copolymer resin particles (pellets).

Next, 14.0 kg of the obtained ethylene-vinyl acetate copolymer resin particles was inserted into a 100 L autoclave equipped with a stirrer, and 45 kg of pure water as an aqueous medium, 315 g of magnesium pyrophosphate as a dispersant, and 10 g of sodium dodecyl benzenesulfonate as a surfactant were added thereto, and the mixture was then stirred to suspend the ethylene-vinyl acetate copolymer resin particles in the aqueous medium. This was held for 10 minutes and then the temperature was raised to 60°C to obtain an aqueous suspension.

Next, 6.0 kg of a styrene monomer having 7.2 g of dicumyl peroxide as a polymerization initiator dissolved therein was added dropwise to the obtained aqueous suspension over 30 minutes. This was held at 60°C for 30 minutes after the dropwise addition so that the styrene monomer was absorbed into the ethylene-vinyl acetate copolymer resin particles.

Next, the temperature of the aqueous suspension was raised to 130°C and stirring was continue at this temperature for 1 hour and 45 minutes to polymerize the styrene monomer (first polymerization).

Next, the aqueous suspension was cooled to 90°C, and after adding 60 g of sodium dodecyl benzenesulfonate as a surfactant, 5.0 kg of a styrene monomer having 50.4 g of benzoyl peroxide and 4.0 g of t-butyl peroxybenzoate as polymerization initiators, and 98.7 g of dicumyl peroxide as a crosslinking agent dissolved therein was added dropwise thereto over 2 hours. Subsequently, 10.0 kg of a styrene monomer having dissolved therein 350 g of ethylene bis-stearic acid amide as a cell regulator was added dropwise thereto over 2 hours. Thereafter, the aqueous suspension was held at 90°C for 1 hour.

Next, the temperature of the aqueous suspension was raised to 143°C and was held at this temperature for 2 hours to complete polymerization (second polymerization). Thereafter, the aqueous suspension was cooled to ambient temperature, and about 35 kg of composite resin particles was removed from the 100 L autoclave.

The used styrene monomer was 150 parts by mass with respect to 100 parts by mass of the ethylene-vinyl acetate copolymer resin particles.

Next, 2 kg of the obtained composite resin particles and 2 L of pure water were charged into a 5 L pressure-resistant autoclave equipped with a stirrer, and 300 g of butane as a blowing agent was further fed thereinto. After feeding, the temperature was raised to 70°C with stirring and the mixture was held at this temperature for 3 hours. Thereafter, the mixture was cooled to ambient temperature and expandable composite resin particles were removed, and then dehydrated and dried.

Thereafter, the expandable composite resin particles were pre-expanded to a bulk density of 0.033 g/cm$^3$ to obtain 2 kg of pre-expanded particles.

Next, after the obtained pre-expanded particles were left to stand at room temperature for 7 days, the pre-expanded particles were filled into a molding cavity having a cavity of a size of 400 x 300 x 30 mm, and this was heated by introducing 0.08 MPa of steam for 40 seconds. Thereafter, this was cooled until the surface pressure of the expanded molded article was reduced to 0.01 MPa and the expanded molded article was removed. By these molding conditions, an expanded molded article having a good appearance and fusion, and a density of 0.033 g/cm$^3$ was obtained.

(Example 2)

Other than using 260 g of isopentane instead of 300 g of butane as the blowing agent, and removing the expandable composite resin particles and treating with warm air at 60°C for 1 hour, an expanded molded article was obtained in the same manner as Example 1.

(Example 3)

Other than using 200 g of isopentane instead of 300 g of butane as the blowing agent, and pre-expanding the expandable resin particles to a bulk density of 0.066 g/cm$^3$ and further pre-expanding to a bulk density of 0.033 g/cm$^3$ after 8 hours, an expanded molded article was obtained in the same manner as Example 1.

(Example 4)

Other than pre-expanding the expandable resin particles to a bulk density of 0.025 g/cm$^3$, an expanded molded article was obtained in the same manner as Example 1.

(Example 5)

Production of Composite Resin Expanded Molded Article of Ethylene-Vinyl Acetate Copolymer (EVA)/Polystyrene-Based Resin (PS) = 30/70

Ethylene-vinyl acetate copolymer resin particles (manufactured by Japan Polyethylene Corporation, product name: Novatec EVA LV-115, vinyl acetate content of 4.0% by mass) were supplied to an extruder, and heated and mixed (melt kneading), and then granulated by an under-water cutting technique and adjusted so as to become 40 mg per 100 particles to obtain 12.0 kg of ethylene-vinyl acetate copolymer resin particles (pellets).

Next, 10.5 kg of the obtained ethylene-vinyl acetate copolymer resin particles were inserted into a 100 L autoclave equipped with a stirrer, 45 kg of pure water as an aqueous medium, 315 g of magnesium pyrophosphate as a dispersant, and 10 g of sodium dodecyl benzenesulfonate as a surfactant were added thereto, and the mixture was then stirred to suspend the ethylene-vinyl acetate copolymer resin particles in the aqueous medium. This was held for 10 minutes and then the temperature was raised to 60°C to obtain an aqueous suspension.

Next, 4.5 kg of a styrene monomer having 5.4 g of dicumyl peroxide as a polymerization initiator dissolved therein was added dropwise to the obtained aqueous suspension over 30 minutes. This was held at 60°C for 30 minutes after the dropwise addition so that the styrene monomer was absorbed into the ethylene-vinyl acetate copolymer resin particles.

Next, the temperature of the aqueous suspension was raised to 130°C and stirring was continue at this temperature for 1 hour and 45 minutes to polymerize the styrene monomer (first polymerization).

Next, the aqueous suspension was cooled to 90°C, and after adding 60 g of sodium dodecyl benzenesulfonate as a surfactant and 6.6 kg of a styrene monomer having 58.8 g of benzoyl peroxide and 4.4 g of t-butyl peroxybenzoate as polymerization initiators, and 90 g of dicumyl peroxide as a crosslinking agent dissolved therein was added dropwise thereto over 2 hours. Subsequently, 13.4 kg of a styrene monomer having dissolved therein 350 g of ethylene bis-stearic acid amide as a cell regulator was added dropwise thereto over 2 hours. Thereafter, the aqueous suspension was held at 90°C for 1 hour.

Next, the temperature of the aqueous suspension was raised to 143°C and was held at this temperature for 2 hours to complete polymerization (second polymerization). Thereafter, the aqueous suspension was cooled to ambient temperature, and about 35 kg of composite resin particles was removed from the 100 L autoclave.

The used styrene monomer was 230 parts by mass with respect to 100 parts by mass of the ethylene-vinyl acetate copolymer resin particles.

Thereafter, other than using the obtained composite resin particles and pre-expanding the expandable resin particles to a bulk density of 0.025 g/cm$^3$, an expanded molded article was obtained in the same manner as Example 1.

(Example 6)

Other than changing the 350 g of ethylene bis-stearic acid amide as the cell regulator to 525 g, using 260 g of isopentane instead of 300 g of butane as the blowing agent, and removing the expandable composite resin particles and treating with warm air at 60°C for 1 hour, an expanded molded article was obtained in the same manner as Example 1.

(Example 7)

Other than changing the 350 g of ethylene bis-stearic acid amide as the cell regulator to 263 g, an expanded molded article was obtained in the same manner as Example 1.

(Comparative Example 1)

Other than changing the 350 g of ethylene bis-stearic acid amide as the cell regulator to 50 g, an expanded molded article was obtained in the same manner as Example 1.

(Comparative Example 2)

Other than using 300 g of isopentane instead of 300 g of butane as the blowing agent, an expanded molded article was obtained in the same manner as Comparative Example 1.

(Comparative Example 3)

Other than changing the 350 g of ethylene bis-stearic acid amide as the cell regulator to 50 g, an expanded molded article was obtained in the same manner as Example 5.

(Comparative Example 4)

Other than, making the temperature of the reaction system 60°C after obtaining the composite resin particles, charging 350 g of tri(2,3-dibrompropyl)isocyanate (manufactured by Nippon Kasei Chemical Co., Ltd) as a flame retardant, raising the temperature of the reaction system to 140°C after the charging, and continuing to stir for 2 hours to obtain flame retardant-containing composite resin particles, an expanded molded article was obtained in the same manner as Example 1.

(Comparative Example 5)

Other than changing the 350 g of ethylene bis-stearic acid amide as the cell regulator to 700 g, an expanded molded article was obtained in the same manner as Example 1.

The obtained expanded molded articles of Examples 1 to 7 and Comparative Examples 1 to 5 were measured and evaluated by the aforementioned methods. The results thereof are shown in Tables 1 and 2.

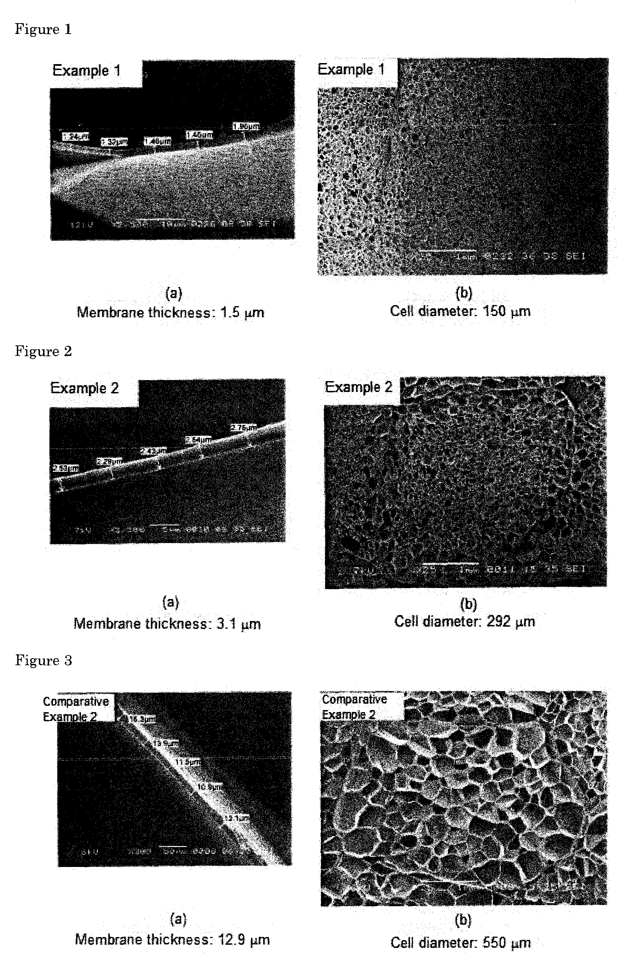

Figure 1(a) is a SEM image showing the average cell membrane thickness of the expanded molded article of Example 1, and Figure 1(b) is a SEM image showing the average cell diameter of the expanded molded article of Example 1. It is shown that these are 1.5 $\mu$m and 150 $\mu$m respectively.

Figure 2(a) is a SEM image showing the average cell membrane thickness of the expanded molded article of Example 2, and Figure 2(b) is a SEM image showing the average cell diameter of the expanded molded article of Example 2. It is shown that these are 3.1 $\mu$m and 292 $\mu$m respectively.

Figure 3(a) is a SEM image showing the average cell membrane thickness of the expanded molded article of Comparative Example 2, and Figure 3(b) is a SEM image showing the average cell diameter of the expanded molded article of Comparative Example 2. It is shown that these are 12.9 $\mu$m and 550 $\mu$m respectively.

Table 1

| | Composite Resin Particles | | Additives | | Expandable Particles | Expanded Particles | |
| | Constituent Resins | | | | Blowing Agent | Pre-Expansion Conditions | Bulk Density |
| | EVA Parts by Mass | PS Parts by Mass | Cell Regulator EBSA | Flame Retardant | | Temperature*Treatment Time | |
| | | | % by mass*** | | % by mass*** | | g/cm³ |
|---|---|---|---|---|---|---|---|
| Standard | 100 | 100–400 | - | Not included | - | - | - |
| Example 1 | 100 | 150 | 1.0 | Not included | B/15 | 90°C*3 min | 0.033 |
| Example 2 | 100 | 150 | 1.0 | Not included | P/13 | 60°C*1 hr +90°C*3 min* | 0.033 |
| Example 3 | 100 | 150 | 1.0 | Not included | P/10 | 90°C*3 min +90°C*2 min** | 0.066⇒0.033 |
| Example 4 | 100 | 150 | 1.0 | Not included | B/15 | 90°C*3 min | 0.025 |
| Example 5 | 100 | 230 | 1.0 | Not included | B/15 | 90°C*3 min | 0.025 |
| Example 6 | 100 | 150 | 1.5 | Not included | B/13 | 90°C*3 min | 0.033 |
| Example 7 | 100 | 150 | 0.75 | Not included | B/15 | 90°C*3 min | 0.033 |
| Comparative Example 1 | 100 | 150 | 0.14 | Not included | B/15 | 90°C*3 min | 0.033 |
| Comparative Example 2 | 100 | 150 | 1.0 | Not included | P/15 | 90°C*3 min | 0.033 |
| Comparative Example 3 | 100 | 230 | 0.14 | Not included | B/15 | 90°C*3 min | 0.033 |
| Comparative Example 4 | 100 | 150 | 1.0 | Included | B/15 | 90°C*3 min | 0.033 |

(continued)

| | Composite Resin Particles | | | | Expandable Particles | Expanded Particles | |
|---|---|---|---|---|---|---|---|
| | Constituent Resins | | Additives | | Blowing Agent | Pre-Expansion Conditions | Bulk Density |
| | EVA Parts by Mass | PS Parts by Mass | Cell Regulator EBSA | Flame Retardant | | | |
| | | | % by mass*** | | % by mass*** | Temperature*Treatment Time | g/cm$^3$ |
| Comparative Example 5 | 100 | 150 | 2.0 | Not included | B/15 | 90°C*3 min | 0.033 |
| EVA: Ethylene-vinyl acetate copolymer<br>Blowing agent B: Butane<br>PS: Polystyrene-based resin<br>Blowing agent P: Isopentane<br>EBSA: Ethylene bis-stearic acid amide<br>*: Hot air treatment+pre-expansion<br>**: 2-stage pre-expansion<br>***: Composite resin particle comparison | | | | | | | |

Table 2

| | Expanded Molded Article | | | | | | |
| | Density | Average Cell Diameter D | Average Cell Membrane Thickness T | Average Cell Diameter x Average Membrane Thickness | Burning Speed | Rate of Dimensional Change on Heating | Aliphatic Hydrocarbons |
| | g/cm$^3$ | μm | μm | | mm/min | % | % by mass |
| Standard | - | 100-500 | 1-5 | 200-1,100 | - | 1.0> | 0.5> |
| Example 1 | 0.033 | 150 | 1.5 | 225 | 70 | 0.6 | 0.25 |
| Example 2 | 0.033 | 292 | 3.1 | 905 | 66 | 0.7 | 0.15 |
| Example 3 | 0.033 | 320 | 2.0 | 640 | 72 | 0.7 | 0.10 |
| Example 4 | 0.025 | 200 | 1.7 | 340 | 78 | 0.8 | 0.20 |
| Example 5 | 0.025 | 350 | 1.5 | 525 | 85 | 0.9 | 0.30 |
| Example 6 | 0.033 | 110 | 2.1 | 231 | 72 | 0.7 | 0.15 |
| Example 7 | 0.033 | 480 | 2.3 | 1,104 | 75 | 0.7 | 0.21 |
| Comparative Example 1 | 0.033 | 630 | 2.0 | 1,260 | 104 | 0.7 | 0.24 |
| Comparative Example 2 | 0.033 | 550 | 12.9 | 7,095 | 88 | 0.7 | 0.30 |
| Comparative Example 3 | 0.033 | 650 | 2.0 | 1,300 | 115 | 0.7 | 0.22 |
| Comparative Example 4 | 0.033 | 150 | 1.8 | 270 | 63 | 1.4 | 0.24 |
| Comparative Example 5 | 0.033 | 90 | 0.9 | 81 | 75 | 1.1 | 0.22 |

From the results of Table 1, it is understood that the expanded molded articles of Examples 1 to 7, compared to the expanded molded articles of Comparative Examples 1 to 5, have superior slow-burning properties and thermal resistance while not including a flame retardant.

For example, the expanded molded article of Example 1, compared to the expanded molded article of Comparative Example 2 having the same resin constitution, has a burning speed slower by 18 mm/min, and thus has slow-burning properties.

**Claims**

1. A composite resin expanded molded article comprising: 100 parts by mass of an ethylene-vinyl acetate copolymer; and 100 to 400 parts by mass of a polystyrene-based resin, wherein said composite resin expanded molded article has an average cell diameter D of 100 to 500 μm and an average cell membrane thickness T of 1 to 5 μm.

2. The composite resin expanded molded article according to claim 1, wherein said composite resin expanded molded article does not include a flame retardant.

3. The composite resin expanded molded article according to claim 1, wherein said average cell diameter D and said average cell membrane thickness T satisfy a relationship of 200≤DxT≤1,100.

4. The composite resin expanded molded article according to claim 1, wherein a content of aliphatic hydrocarbons having 3 to 6 carbons in said composite resin expanded molded article is 0.5% by mass or less.

Figure 1

(a)
Membrane thickness: 1.5 μm

(b)
Cell diameter: 150 μm

Figure 2

(a)
Membrane thickness: 3.1 μm

(b)
Cell diameter: 292 μm

Figure 3

(a)
Membrane thickness: 12.9 μm

(b)
Cell diameter: 550 μm

## INTERNATIONAL SEARCH REPORT

| | International application No. |
|---|---|
| | PCT/JP2014/058907 |

**A. CLASSIFICATION OF SUBJECT MATTER**
*C08J9/04*(2006.01)i

According to International Patent Classification (IPC) or to both national classification and IPC

**B. FIELDS SEARCHED**

Minimum documentation searched (classification system followed by classification symbols)
C08J9/04

Documentation searched other than minimum documentation to the extent that such documents are included in the fields searched
| | | |
|---|---|---|
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)
JSTPlus/JMEDPlus/JST7580(JDreamIII), CAplus(STN)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2010/101145 A1 (Sekisui Plastics Co., Ltd.),<br>10 September 2010 (10.09.2010),<br>claims 1, 3, 7; 0038; examples 1, 2, 6; fig. 1, 2<br>& US 2012/0041085 A1  & EP 2404958 A1<br>& CN 102341445 A  & TW 201037030 A<br>& KR 10-2011-0130414 A | 1–4<br>1–4 |
| X<br>Y | WO 2011/030762 A1 (Sekisui Plastics Co., Ltd.),<br>17 March 2011 (17.03.2011),<br>claim 1; 0066; example 5; fig. 5<br>& TW 201127888 A | 1–4<br>1–4 |

| ☒ | Further documents are listed in the continuation of Box C. | ☐ | See patent family annex. |
|---|---|---|---|

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 23 May, 2014 (23.05.14) | 03 June, 2014 (03.06.14) |

| Name and mailing address of the ISA/<br>Japanese Patent Office | Authorized officer |
|---|---|
| Facsimile No. | Telephone No. |

Form PCT/ISA/210 (second sheet) (July 2009)

## INTERNATIONAL SEARCH REPORT

| | International application No. |
|---|---|
| | PCT/JP2014/058907 |

C (Continuation).    DOCUMENTS CONSIDERED TO BE RELEVANT

| Category* | Citation of document, with indication, where appropriate, of the relevant passages | Relevant to claim No. |
|---|---|---|
| X<br>Y | WO 2011/122081 A1  (Sekisui Plastics Co.,<br>Ltd.),<br>06 October 2011 (06.10.2011),<br>claims 1, 3; 0044; examples 1, 16; table 4<br>& US 2013/0065977 A1    & DE 112011101173 T<br>& CN 102858860 A        & TW 201139541 A | 1-4<br>1-4 |
| Y | JP 2012-72314 A (Sekisui Plastics Co., Ltd.),<br>12 April 2012 (12.04.2012),<br>claim 1; 0011 to 0012; examples 1 to 3<br>(Family: none) | 1-3 |
| Y | JP 2012-67215 A  (Sekisui Plastics Co., Ltd.),<br>05 April 2012 (05.04.2012),<br>claim 2; 0015; examples 1, 3 to 7<br>(Family: none) | 1-3 |
| Y | JP 2012-72225 A  (JSP Corp.),<br>12 April 2012 (12.04.2012),<br>claim 1; 0035<br>& CN 102443215 A | 4 |
| A | US 3682844 A  (Edward J. Schwoegler et al.),<br>08 August 1972 (08.08.1972),<br>all references<br>(Family: none) | 1-4 |

Form PCT/ISA/210 (continuation of second sheet) (July 2009)

**EP 2 980 143 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012072225 A

- JP 2006257150 A

**Non-patent literature cited in the description**

- Cellular Plastics-Polyethylene-Methods of Test. *JIS K6767,* 1999

- Preformed Cellular Plastics Thermal Insulation Materials. *JIS A9511,* 1995